# EUROPEAN PATENT APPLICATION

(11) **EP 0 541 387 A1**
(43) Date of publication of application: **12.05.1993**
(21) Application number: 92310180.2
(22) Date of filing: 06.11.1992
(51) Int. Cl.: F16H 7/12

(54) **Tensioner mechanism using external spring**

(30) Priority: 07.11.1991 JP 99408/91 U
(71) Applicant: TSUBAKIMOTO CHAIN CO., Osaka-fu 538 (JP)
(72) Inventor: Harada, Norio, Iruma-shi, Saitama-ken (JP); Kozakura, Nobuto, Hanno-shi, Saitama-ken (JP); Nakakubo, Katsuya, Tokorozawa-shi, Saitama-ken (JP)
(74) Representative: Meddle, Alan Leonard

(57) **Abstract**

In a tensioner mechanism comprising a fluid-filled piston-type tensioner (20) having an internal spring (30) urging a piston rod (32) against a pivotable member (10) having a belt-contacting idler (14), the tensioning force applied to the belt (16) by the idler roller (14) is exerted at least in part by an auxiliary spring (18) which is external to the piston-type tensioner (20), anchored at one end to a fixed support such as an engine block (12), and connected at its other end to the pivotable member (10). The use of the external spring (18) makes it possible to decrease the size of the tensioner housing, and also makes it possible to use the same tensioner assembly in different power transmissions having various tension requirements and various requirements for range of motion of the belt-contacting idler (14).

## Description

### Summary of the Invention

This invention relates to a tensioner mechanism for applying tension to an endless belt extending around two pulleys and arranged to transmit power from one pulley to the other. The term "belt", as used herein, should be understood as encompassing any flexible belt, chain or other device adapted to transmit rotating power from one pulley to another, including, for example a toothed belt of the type used in an internal combustion engine to drive the camshaft, or a V belt for driving an alternator or other auxiliary machine associated with an engine.

By way of example, when a tensioner is utilized to maintain a predetermined tension in a toothed belt used to drive the cam shaft of an engine, the tensioner is typically mounted on an engine block and positioned so that it exerts a force on a pivotable member supporting an idler roller which is in contact with the belt, thereby urging the roller against the belt so that the tension in the belt is increased. The tensioning force is exerted by a spring incorporated in the tensioner.

The tension required for the belt increases with increasing engine output power. Thus, while a particular tensioner may serve satisfactorily in a small engine, the same tensioner may not be adequate for a larger engine. Similarly, a given tensioner may operate satisfactorily with a given engine through a normal range of engine speeds, but not satisfactorily at engine speeds outside the normal range. Furthermore, for a given tensioner, the range of movement of the associated idler roller is limited, because the only biasing force is the force exerted by the internal spring incorporated in the tensioner, and the size of the spring is restricted. The amount of expansion and contraction of the belt can be large, especially in the case of a V belt, and consequently it is very difficult for a spring incorporated in a tensioner to establish a predetermined tension over the entire range of movement of the idler roller in contact with the belt.

It is, of course, possible to obtain increased tension by means of a strong spring. However, this results in increase in the size and weight of the tensioner, and also requires a larger mounting space.

The principal object of this invention is to provide a tensioner assembly for an endless belt transmission which is capable of establishing a desired degree of tension over a wide range of movement of a pivotable member which is in contact with the belt. It is also an object of the invention to decrease the size of the tensioner housing. A still further object of the invention is to increase the versability of a given tensioner assembly by making it possible to use the same tensioner assembly in different power transmissions having various tension requirements and various requirements for range of motion of the belt-contacting idler.

The invention addresses the above objects by providing a tensioner mechanism in which the built-in spring is supplemented by an external spring connected to the pivotable member so that the tension of the belt is affected by both springs. More particularly, the tensioning mechanism in accordance with the invention comprises a tensioner assembly having a tensioner assembly housing with an interior and exterior, and a rod projecting from said housing and guided thereby for projecting and retracting movement; a pivotable member having means for engaging and applying tension to an endless belt; means for pivoting said member for swinging movement about a pivot axis whereby said engaging means can apply increasing tension to said belt; and built-in spring means within the interior of said housing for urging said rod in a projecting direction relative to said tensioner assembly housing, said rod being in engagement with said pivotable member and positioned to move said pivotable member so that the belt engaging means applies increased tension to the belt as the rod moves in the projecting direction relative to said tensioner assembly housing; wherein the improvement comprises a stationary spring anchoring element positioned in fixed relationship to said pivot axis and external to said tensioner assembly housing; and external spring means connected between said pivotable member and said spring anchoring element; said external spring means being located external to said tensioner assembly housing and also urging said pivotable member in a direction about said pivot axis such that the belt engaging means applies increased tension to said belt, whereby tension is applied to said belt by both of said springs.

Still other objects, advantages and details of the invention will become apparent from the following detailed description when read in conjunction with the drawings.

### Brief description of the Drawings

FIG. 1 is a front elevational view of a tensioner mechanism according to a first embodiment of the invention, showing the tensioner in a sectional view;
FIG. 2 is a side elevational view of the tensioner mechanism of FIG. 1;
FIG. 3 is a front elevational view of a tensioner mechanism according to a second embodiment of the invention;
FIG. 4 is a sectional view, from the side, of a tensioner mechanism according to a third embodiment of the invention; and
FIG. 5 is a front elevational view of the tensioner mechanism of FIG. 4.

### Detailed Description

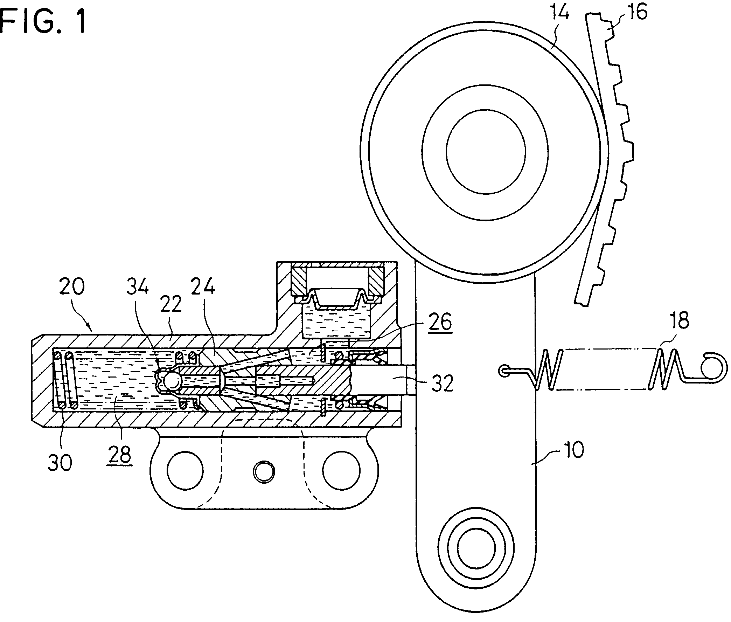

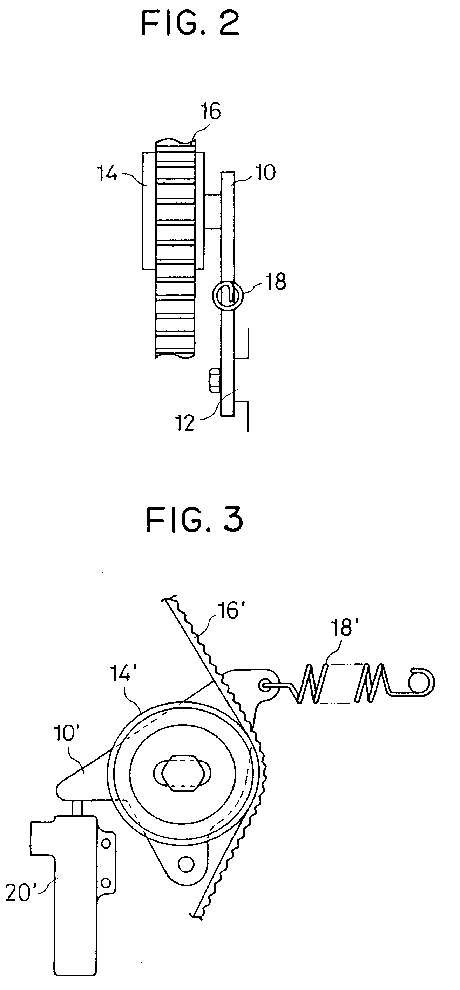

In FIGs. 1 and 2, an fluid-operated tensioner 20 comprises a housing in the form of a cylinder 22 filled with an oil, and a piston 24 which fits loosely in the cylinder 22 with a small gap between the piston and the interior wall of the cylinder to provide for restricted flow of oil past the piston as the piston moves axially within the cylinder. The piston partitions the interior of the cylinder into a front chamber 26 and a rear chamber 28. A spring 30, which is in the form of a coil spring in compression, fits in the piston rear chamber 28, and urges the piston forward. A rod 32, integral with piston 24 extends through the front chamber 26 to the exterior of the cylinder. A check valve 34, disposed in an oil passage in the piston, provides fluid communication between the front chamber 26 and the rear chambers 28, admit oil into rear chamber as the piston moves forward.

The piston is able to move forward rapidly, because the check valve 34 allows rapid flow of oil from the front chamber to the rear chamber. However, the piston can only retract slowly, as the check valve prevents flow of oil in the opposite direction through the fluid passage in the piston, and oil can only flow from the rear chamber into the front chamber through the restricted passage provided by the gap between the piston and the internal wall of the cylinder.

A pivotable member 10 is pivotably supported at one end on a shaft fixed to engine block 12 (FIG. 2). The pivotable member is provided with an idler roller 14 at its opposite end. Idler roller 14 is in contact with the back of a toothed belt 16, which can be, for example, the toothed belt which drives the camshaft from the crankshaft in an internal combustion engine.

The end of tensioner rod 32 which is external to the tensioner housing engages pivotable member 20 at an intermediate location between the pivot axis and idler roller 14, and is positioned so that the direction of movement of rod 32 is parallel to, and preferably in, the plane of movement of member 20. Tensioner 20, by virtue of the action of spring 30 incorporated therein, presses pivotable member 10 in a direction in which the tension of belt 16 is increased. The closure of check valve 34 when the piston moves in the retracting direction, prevent the tension in toothed belt 16 from decreasing suddenly.

An external tension spring 18 is anchored at one end to the engine block 12 which is a stationary portion, and its opposite end is connected to pivotable member 10. The tension in external spring 18 urges the pivotable member in the same direction in which it is urged by internal tensioner spring 30, i.e. in the direction to increase the tension in belt 16. Thus, tension is applied to toothed belt 16 both by the internal spring incorporated in tensioner 20 and by external spring 18, both acting on pivotable member 10.

The second embodiment of the invention, as shown in FIG. 3, utilizes a tensioner 20′, which is of the same structure as tensioner 20 in the first embodiment. A pivotable member 10′ is supported from an engine block (not shown) through a shaft in a manner similar to the manner in which pivotable member 10 is supported in FIG. 2. Pivotable member 10′ supports an idler roller 14′. An external tension spring 18, anchored at one end to the engine block and connected at its other end to member 10′ urges the pivotable member in a direction such that idler roller 14 is pressed against toothed belt 16′ to increase the tension therein. Thus both the internal spring incorporated in tensioner 20,′ and external spring 18′, impart tension to toothed belt 16′. In the embodiment of FIG. 3, since the distance between attachment point of spring 18′ to the pivotable member and the pivot axis is greater than the distance between roller 14′ and the pivot axis, the force applied to the toothed belt spring 18′ is greater than the force is applied by the spring to the pivotable member at the attachment point. However, the range of movement of the idler roller is smaller than the range of movement of the attachment point.

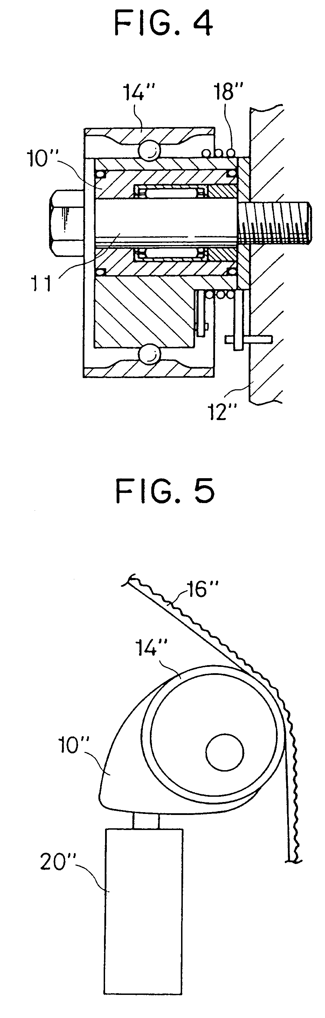

In the third embodiment of the invention, as illustrated in FIGs. 4 and 5, a tensioner 20˝ is provided, which also is of the same structure as the tensioner of the first embodiment. An idler roller 14˝ is rotatably mounted on a pivotable member 10˝. Member 10˝ is eccentrically mounted on a shaft 11 and is pivotable about the axis of the shaft. When the piston of the tensioner moves in the extending direction, the piston rod, which is in engagement with pivotable member 10˝, causes the pivotable member to rotate about shaft 11, thereby moving the idler roller 14˝ in the direction to increase the tension in toothed belt 16˝.

An external spring 18˝, which in this case is a torsion spring, is interposed between pivotable member 10˝ and an engine block 12˝, and also urges idler roller 14˝, against toothed belt 16˝ to increase the tension in the belt.

In each of the three embodiments described above, the internal spring incorporated in the tensioner functions to advance the piston and urge the pivotable member in the tension-increasing direction. However, by virtue of the use of the external spring, it is possible to make the built-in tensioner spring smaller in size. It is possible to utilize an internal a spring having only the biasing force necessary to return the piston when pushed in, so that the tensioner 20, 20′ or 20˝ functions primarily only as a damper, and to rely almost entirely on the external spring to impart tension to the toothed. In such a construction, wherein the tensioner functions primarily as a damper, it is possible to suppress vibration even in applications involving large variations of torque. In such a tensioner mechanism, the tensioner itself does not impart significant tension to the toothed belt, and adjustment of the tension of the toothed belt is substantially entirely dependent on the choice of the external spring. It is possible to adapt the same tensioner to various conditions of use by mere replacement of the external spring , which is easily accomplished. Consequently, it is possible to reduce the size of the tensioner, and to utilize the same tensioner in various applications, including applications, such as the tensioning of a V belt, in which a large range of movement is required. The invention also makes it possible to standardize the tensioner in order to satisfy the demand for a few-of-a-kind lots.

Various modifications can be made to the embodiments disclosed. For example, instead of using coiled tension springs of torsion springs, it is possible to use a compression spring as the external spring, and also to use various forms of spring other than a coil spring. Still other modifications, which will occur to persons skilled in the art, can be made to the embodiments described herein without departing from the scope of the invention as defined in the following claim.

The features disclosed in the foregoing description, in the following claims and/or in the accompanying drawings may, both separately and in any combination thereof, be material for realising the invention in diverse forms thereof.

## Claims

1. A tensioning mechanism for an endless belt transmission comprising a tensioner assembly having a tensioner assembly housing with an interior and exterior, and a rod projecting from said housing and guided thereby for projecting and retracting movement; a pivotable member having means for engaging and applying tension to an endless belt; means for pivoting said member for swinging movement about a pivot axis whereby said engaging means can apply increasing tension to said belt; and built-in spring means within the interior of said housing for urging said rod in a projecting direction relative to said tensioner assembly housing, said rod being in engagement with said pivotable member and positioned to move said pivotable member so that the belt engaging means applies increased tension to the belt as the rod moves in the projecting direction relative to said tensioner assembly housing; wherein the improvement comprises a stationary spring anchoring element positioned in fixed relationship to said pivot axis and external to said tensioner assembly housing; and external spring means connected between said pivotable member and said spring anchoring element; said external spring means being located external to said tensioner assembly housing and also urging said pivotable member in a direction about said pivot axis such that the belt engaging means applies increased tension to said belt, whereby tension is applied to said belt by both of said springs.
